# EUROPÄISCHE PATENTSCHRIFT

(11) **EP 1 118 298 B1**
(45) Veröffentlichungstag und Bekanntmachung des Hinweises auf die Patenterteilung: **15.09.2004**
(21) Anmeldenummer: 00101087.5
(22) Anmeldetag: 20.01.2000
(51) Int. Cl.: A47J 31/00

(54) **Vorrichtung zum Zubereiten heisser Getränke**
Device for preparing hot beverages
Dispositif pour préparer des boissons chaudes

(43) Veröffentlichungstag der Anmeldung: 25.07.2001
(73) Patentinhaber: Timm, Eberhard, 21614 Buxtehude (DE)
(72) Erfinder: Timm, Eberhard, 21614 Buxtehude (DE)
(74) Vertreter: Glawe, Delfs, Moll & Partner

(56) Entgegenhaltungen:
- EP-A- 0 479 111
- DE-U- 29 801 337

## Beschreibung

Die Erfindung betrifft eine Vorrichtung zum Zubereiten heißer Getränke, Suppen und ähnlicher Nahrungs/Genußmittel mit einem Trinkbecher und einem darin anzuordnenden mit einer Heizeinrichtung versehenen Behälter für die zu erwärmende Flüssigkeit, die nach dem Erwärmen in den Trinkbecher entleert wird, nachdem ein Ventil des Behälters geöffnet worden ist.

Mit vorbekannten Vorrichtungen dieser Art (EP 0 382 001 B, EP 0 479 111 B) können unterwegs Getränke zubereitet werden. Zu diesem Zweck wird ein mit Flüssigkeit befüllter oder zu befüllender Behälter, der eine Heizeinrichtung aufweist, in einen Trinkbecher eingesetzt. Trinkbecher und darin angeordneter Behälter mit Flüssigkeit und Heizeinrichtung werden dann in einen speziellen Halter eingesetzt, durch den der Heizeinrichtung Strom zugeführt wird, so daß die Flüssigkeit erhitzt wird und zu kochen beginnt. Infolge des beim Kochen entstehenden Überdrucks öffnet sich das Ventil, so daß die erhitzte Flüssigkeit in den Trinkbecher strömt und eine dort oder an der Ausströmöffnung des Behälters angeordnete Brühsubstanz aufbrüht. Obwohl diese Anordnung sehr zweckmäßig ist und es jederzeit erlaubt, unterwegs heiße Getränke, heiße Suppen oder dergleichen zuzubereiten, ist die Konstruktion aufwendig, da ein besonderer Halter benötigt wird. Die vorbekannte Vorrichtung hat daher den Nachteil hoher Fertigungsund Gestehungskosten, die durch den großen Fertigungsaufwand bedingt sind. Außerdem muß ein für die Vorrichtung erforderlicher Halter im Fahrzeug angebracht werden, was ebenfalls störend ist. Dasselbe gilt natürlich, wenn die Vorrichtung zu Hause oder im Büro verwendet werden soll.

Die Aufgabe der Erfindung besteht in der Schaffung einer Vorrichtung der eingangs genannten Art, die mit geringerem Fertigungsaufwand hergestellt werden kann und die ohne besondere Halter oder lediglich mit Haltern zu betreiben ist, die ohnehin in modernen Kraftfahrzeugen vorhanden sind.

Die erfindungsgemäße Lösung besteht darin, daß das Ventil mit Betätigungseinrichtungen versehen ist, durch die es beim Einsetzen des Behälters in den Trinkbecher geschlossen und beim Herausnehmen geöffnet wird.

Der Behälter kann einfach in den Trinkbecher hineingestellt werden. Eine besondere Halterung für die Stromzuführung ist nicht mehr erforderlich. Der Trinkbecher kann vielmehr im Büro oder zu Hause auf eine ebene Fläche gestellt werden bzw. im Fahrzeug in den Getränkehalter eingesetzt werden. Nachdem der Behälter in den Trinkbecher eingesetzt ist, wird der erstere mit Flüssigkeit, insbesondere Wasser gefüllt. Anschließend wird dann die Stromzufuhr eingeschaltet, was im Falle eines Fahrzeugs oder auch eines Schiffes die 12 V- oder 24 V-Stromversorgung sein kann. Für die Verwendung im Haus oder im Büro kann die Vorrichtung für Betrieb mit 110 V oder 220 V Wechselstrom ausgebildet sein. Man könnte aber auch für den Betrieb zu Hause einen Transformator vorsehen, so daß dieselbe Vorrichtung sowohl zu Hause bzw. im Büro einerseits und im Fahrzeug andererseits verwendet werden kann.

Das Befüllen des Behälters mit Flüssigkeit ist wesentlich einfacher, da der Behälter im Gegensatz zu den vorbekannten Vorrichtungen nicht druckdicht verschlossen werden muß, damit nach Erreichen der gewünschten Temperatur das Ventil durch Überdruck geöffnet werden kann. Es kann vielmehr zum Beispiel ein einfacher Klappdeckel am Behälter vorgesehen sein, durch den die Flüssigkeit eingefüllt wird. Nachdem die gewünschte Temperatur erreicht ist, wird der Behälter aus dem Trinkbecher herausgehoben, wobei sich dann automatisch das Ventil öffnet, so daß die im Trinkbecher befindliche Brühsubstanz aufgebrüht wird.

Bei einer vorteilhaften Ausführungsform ist vorgesehen, daß am unteren Umfangsrang des Behälters ein zweiarmiger Hebel schwenkbar gelagert ist, dessen erster Arm sich vom Lagerpunkt nach oben erstreckt und dessen zweiter Arm unterhalb des Behälterbodens angeordnet ist und so ausgebildet ist, daß er bei Verschwenkung des ersten Arms zum Behälter das in die Öffnungsstellung vorgespannte Ventil in die geschlossene Stellung zieht.

Befindet sich der Behälter außerhalb des Trinkbechers, so wird das Ventil in die Öffnungsstellung gedrückt, wobei der bewegliche Ventilteller den zweiten Arm zum Behälterboden hin zieht, wodurch der erste Arm um den unteren Schwenkpunkt nach außen bewegt wird. Wird dann der Behälter in den Trinkbecher eingesetzt, so wird der erste Arm wieder zum Behälter hin gedrückt, wodurch das Ventil in die geschlossene Stellung gezogen wird, da der zweite Arm nach unten verschwenkt wird. Ist die Flüssigkeit eingefüllt und genügend erwärmt, hebt man den Behälter aus dem Trinkbecher heraus, wodurch sich das Ventil in umgekehrter Richtung wie bei der eben erwähnten Schließbewegung öffnet, so daß die erhitzte Flüssigkeit in den Trinkbecher gelangen kann.

Es wird natürlich eine gewisse Zeit benötigt, bis die erhitzte Flüssigkeit aus dem Behälter in den Trinkbecher geströmt ist. Zweckmäßigerweise wird daher vorgesehen, daß der erste Arm eine Länge hat, die ungefähr 1/3 bis 2/3 der Höhe des Behälters entspricht und an seinem oberen Ende mit einem hakenförmigen Vorsprung versehen ist. Dieser hakenförmige Vorsprung schnappt dann beim Herausheben des Behälters über dem oberen Rand des Trinkbechers ein, so daß der Behälter losgelassen werden kann und in seiner angehobenen Stellung verbleibt. Nach kurzer Zeit, wenn die gesamte Flüssigkeit in den Trinkbecher geströmt ist, kann der Behälter dann herausgenommen werden, und die Flüssigkeit kann getrunken oder die Suppe kann ausgelöffelt werden.

Nicht nur bei dieser Ausführungsform ist dann, wenn der Trinkbecher wieder gereinigt ist oder ein anderer Trinkbecher eingesetzt ist, der Behälter sofort ohne vorherige Reinigung zur Zubereitung des nächsten Getränks oder anderen Nahrungs/Genußmittels bereit. Die Trinkbecher können dabei wiederverwertbare Trinkbecher oder handelsübliche Einwegbecher sein.

Eine andere vorteilhafte Ausführungsform zeichnet sich dadurch aus, daß am oberen Rand des Behälters mehrere sich nach unten erstreckende den Boden teilweise umgreifende nach außen vorgespannte Hebel vorgesehen sind, die beim Einsetzen des Behälters in den Trinkbecher nach innen gedrückt werden und dann mit ihren unteren Enden das Ventil schließen.

Die Hebel sind, solange der Behälter nicht in den Trinkbecher eingesetzt ist, nach außen vorgespannt, stehen also nach außen über die seitliche Behälterwand vor. Wird der Behälter in den Trinkbecher eingesetzt, werden die Hebel nach innen gedrückt und drücken dabei mit ihren unteren Enden gegen das Ventil und schließen es dadurch. Wird nach Einfüllen und Erhitzen der Flüssigkeit der Behälter wieder herausgehoben, so bewegen sich die Hebel aufgrund ihrer elastischen Vorspannung wieder nach außen, so daß sich das Ventil nach unten öffnen kann.

Die Betätigung des Ventils erfolgt auf besonders vorteilhafte und sichere Weise, wenn der bewegliche Teil des Ventils mit zwei Schrägflächen unterschiedlicher Steigung am Umfang versehen ist, an denen die unteren Enden der Hebel angreifen. Zweckmäkßigerweise sind diese unteren Enden dabei mit gut gleitenden Endflächen versehen. Die Hebel greifen beim Einsetzen des Behälters in den Trinkbecher zunächst an der Schrägfläche mit größerer Steigung an und drücken dabei den Ventilteller nach oben in die geschlossene Stellung. Werden die vorderen Enden der Hebel weiter nach innen gedrückt, indem der Behälter ganz in den Trinkbecher eingesetzt wird, gelangen die vorderen Enden der Hebel in den Bereich der Schrägflächen mit geringerer Steigung, wo sie dann die Schließbewegung mit größerer Kraft beenden und das Ventil zuverlässig in der geschlossenen Stellung halten.

Vorteilhafterweise sind sechs um den Umfang gleichmäßig verteilte Hebel vorgesehen.

Besonders vorteilhaft ist es, daß im Gegensatz zu üblichen Heizeinrichtungen, wie zum Beispiel Schnellkochern und dergleichen, wo der Stromanschluß von unten her erfolgt, der Anschluß der Heizeinrichtung von der Oberseite des Behälters erfolgt. Dabei können die Anschlußpunkte der Heizeinrichtung und weiterer elektrischer Komponenten unterhalb des Pegels angeordnet sein, den die Flüssigkeit nach Befüllen des Behälters einnimmt.

Man könnte zwar die Heizeinrichtung in dem Moment von Hand ausschalten, wo die Flüssigkeit zu kochen anfängt. Zweckmäßigerweise und aus Sicherheitsgründen ist aber bei einer vorteilhaften Ausführungsform vorgesehen, daß die Vorrichtung einen Trockenlaufschutzschalter und einen Temperaturfühler aufweist, die als Steuerschalter ausgebildet oder mit solchen verbunden sind. Durch den Temperaturfühler wird die Stromzufuhr unterbrochen, sobald die gewünschte Temperatur erreicht ist. Durch den Trockenlaufschutzschalter, der sich vorteilhafterweise nach einiger Zeit automatisch zurückstellt, wird verhindert, daß die Vorrichtung zu heiß wird, wenn sich keine Flüssigkeit im Behälter befindet.

Vorteilhafterweise weist die Vorrichtung mindestens eine Anzeigelampe, insbesondere eine Leuchtdiode zum Anzeigen des Betriebszustands auf.

Durch die erfindungsgemäße Vorrichtung kann einerseits erreicht werden, daß der Schwerpunkt im zusammengesetzten Zustand im Becher liegt, so daß die Vorrichtung sicher in der Getränkehalterung festgehalten wird. Wenn wie bei vielen Kraftfahrzeugen noch ein zweiter Getränkehalter vorgesehen ist, so kann der Behälter, in dem das Wasser erhitzt worden ist, nach Gebrauch im zweiten Getränkehalter abgelegt werden.

Die erfindungsgemäße Vorrichtung und ähnliche Vorrichtungen können auch in anderer Weise genutzt werden, und zwar insbesondere in Kraftfahrzeugen mit zwei Getränkehaltern oder einem Getränkehalter für zwei Dosen oder Becher. Der Behälter wird wie oben beschrieben mit Flüssigkeit gefüllt, und diese wird erhitzt. Anschließend wird der innere Behälter nicht aus dem äußeren herausgenommen, sondern die Einheit von innerem Behälter und äußerem Behälter aus dem Getränkehalter herausgehoben. Anschließend wird dann durch die Einfüllöffnung des Behälters die Flüssigkeit in einen zweiten Trinkbecher geschüttet, der sich in dem zweiten Getränkehalter befindet.

Die Erfindung wird im folgenden anhand von vorteilhaften Ausführungsformen unter Bezugnahme auf die beigefügten Zeichnungen beispielsweise beschrieben. Es zeigen in schematischer Ansicht:
- Fig. 1: einen Längsschnitt durch eine erste Ausführungsform der Erfindung in einer ersten Stellung;
- Fig. 2: die Ausführungsform der Fig. 1 in einer zweiten Stellung;
- Fig. 3: eine zweite Ausführungsform in einer ersten Stellung;
- Fig. 4: eine Ansicht entlang der Schnittlinie IV-IV von Fig. 3;
- Fig. 5: die Ausführungsform der Fig. 3 in einer zweiten Stellung;
- Fig. 6: eine Ansicht von oben in den Behälter 3, wobei die Gehäuseabdeckung entfernt ist;
- Fig. 7: in ähnlicher Ansicht wie in Fig. 6 den Heizeinsatz, wobei darüber angeordnete Elemente wie Schalter und Halteklammern entfernt sind;
- Fig. 8: eine andere Art der Anwendung der erfindungsgemäßen Vorrichtung.

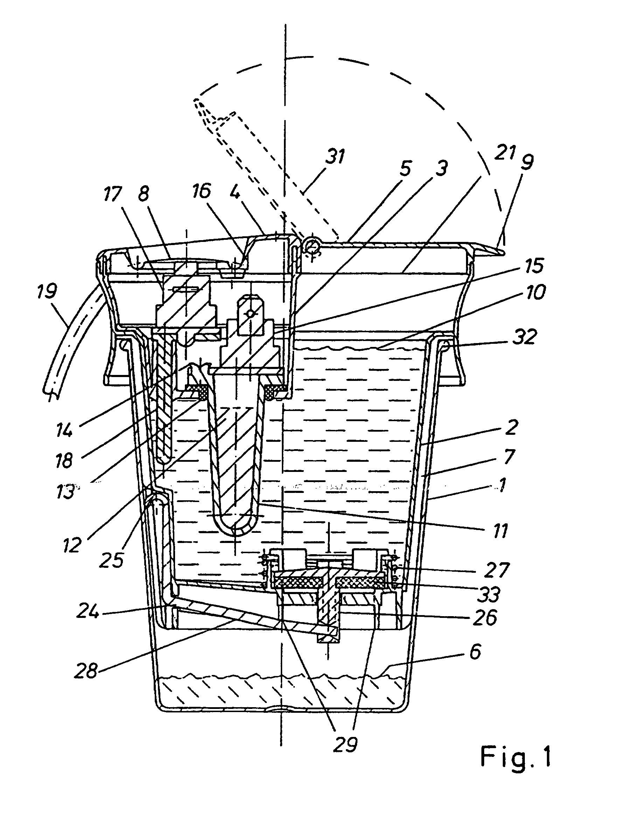

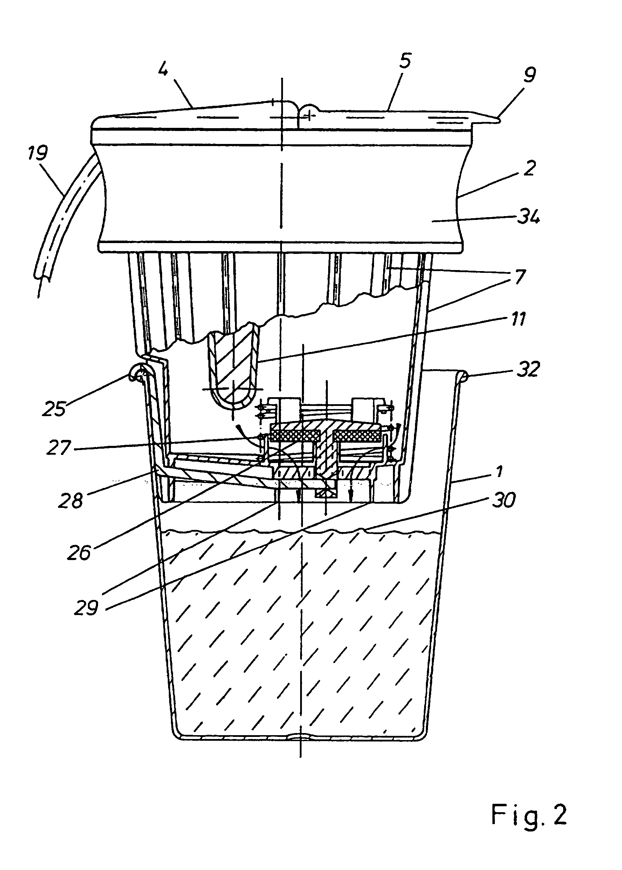

Es wird zunächst auf die Fig. 1 und 2 Bezug genommen. Die in diesen Fig. dargestellte Ausführungsform weist einen Trinkbecher 1 auf, der ein Einwegbecher oder ein mehrfach verwendbarer Becher sein kann. In diesen ist unten eine Brühsubstanz oder ein Extrakt 6 angeordnet, der aufgebrüht werden soll. Am oberen Rand ist der Behälter 1 mit einer Bördelung 32 versehen, auf die ein Behälter 2 aufgesetzt werden kann, der als Wasserheizer ausgebildet ist. Dieser Behälter weist einen Heizeinsatz 11 mit einem entsprechenden Flansch auf; die aktive Heizstrecke ist bei 12 schraffiert angedeutet. Eine typische Leistung bei einer Spannung von 12 V ist zum Beispiel 160 W. Weiter ragt in die Wasserfüllung 10 des Behälters 2 ein Temperaturfühler 18 hinein. Am Heizeinsatz 11 ist weiter ein Trockenlaufschutzschalter 15 angeordnet. Die elektrischen Anschlüsse sind in einem Gehäuse 3 mit einer Gehäuseabdeckung 4 untergebracht. Die elektrischen Anschlüsse weisen weiter einen Taster 8 zum Einschalten der Heizung, eine Leuchtdiodenfassung 16, einen Funktionsschalter mit End-Abschaltung 17 und ein Anschlußkabel 19 auf. Das Gehäuse 4 ist noch durch eine Abdichtungs- und Isoliermanschette 13 gegen Eindringen von Wasser geschützt. Der Behälter 2 kann mit einem Klappdekkel 5 verschlossen werden, der bei 31 in geöffneter Stellung angedeutet ist. Am Deckel 5 ist noch ein grifförmiger Vorsprung 9 vorgesehen, damit der Deckel leichter geöffnet werden kann. Der Deckel 5 verschließt dabei die Befüll- und Ausgießöffnung 21.

Im Boden des Behälters 2 ist ein Ventil 26 vorgesehen, das eine Spiraldruckfeder 27 aufweist, die das Ventil 26 in die geöffnete Stellung vorspannt und dabei den Ventilteller 33 nach oben drückt. An der Betätigungsstange des Ventils 26 ist ein abgewinkelter Hebel 28 angelenkt, der bei 24 am Außenumfang des Behälters gelagert ist. Der abgewinkelte Arm 28 besitzt an seinem oberen Ende einen Haken 25. Das Ventil 26 kann die Wasserauslauföffnung 29 verschließen.

Die Wirkungsweise ist die folgende. Bei der in Fig. 1 dargestellten Stellung ist der Behälter 2 mit der Heizeinrichtung 11 in den Trinkbecher 1 eingesetzt. Der obere Arm des Hebels 28 ist dabei nach innen gedrückt und zieht mit seinem unteren Arm die Betätigungsstange des Ventils 26 entgegen der Vorspannung der Feder 27 nach unten und schließt dadurch das Ventil 26. Die Klappe 5 wird geöffnet, und es wird Wasser eingefüllt. Nach Schließen der Klappe 5 wird der Strom durch Betätigung des Tasters 8 eingeschaltet, der nach Erreichen der gewünschten Temperatur, die vom Temperaturfühler 18 detektiert wird, wieder abgeschaltet wird. Der Betriebszustand wird dabei durch Leuchtdioden, die zum Beispiel in der Fassung 16 angeordnet sind, angezeigt.

Wenn die gewünschte Temperatur erreicht ist, wird der Behälter 2 an seinem Griffteil 34 angehoben. Der Hebel 28 wird dabei durch die Kraft der Druckfeder 26 im Gegenuhrzeigersinn verschwenkt, so daß der obere Arm des Hebels 28 nach außen gedrückt wird. Ist die in Fig. 2 gezeigte Stellung erreicht, so schnappt der Haken 25 am umgebördelten Rand 32 des Trinkbechers 1 ein, so daß der Behälter losgelassen werden kann und in dieser Stellung verbleibt, bis das erhitzte Wasser aus dem Behälter 2 in den Trinkbecher 1 geflossen ist und dort die Heißgetränkflüssigkeit 30 bildet. Anschließend kann dann der Behälter 2 völlig aus dem Trinkbecher 1 herausgehoben werden, so daß das Getränk im Trinkbecher 1 getrunken werden kann, indem der Trinkbecher 1 von der Unterlage abgehoben bzw. aus einer nicht gezeigten Getränkehalterung herausgehoben wird.

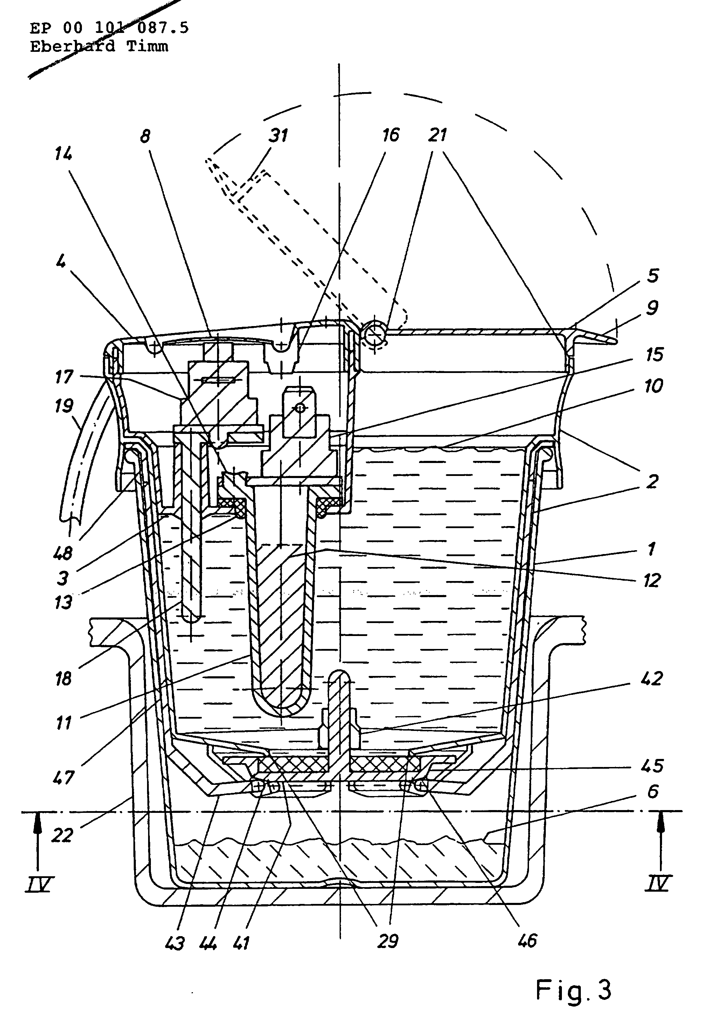

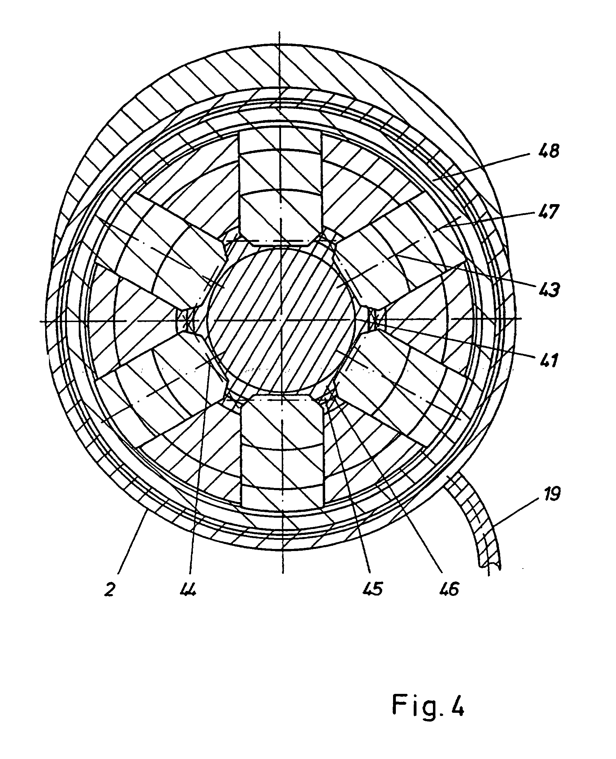

Die Ausführungsform der Fig. 3 bis 7 unterscheidet sich von der Ausführungsform der Fig. 1 und 2 im wesentlichen durch das Ventil und die Art der Ventilbetätigung. Die übrigen Teile sind die gleichen und auch mit gleichen Bezugsziffern bezeichnet. Bei der Ausführungsform der Fig. 3 bis 7 bezeichnet 41 das Ventil, mit dem die Auslauföffnung 29 verschlossen werden kann. Mit 42 ist ein Führungsschaft bezeichnet. Das Ventil 41 wird durch abgewinkelte Hebel 43 betätigt, die am oberen Rand des Behälters 2 befestigt sind, während der untere Teil nach außen schwenkbar vorgespannt ist. Wie dies in Fig. 4 gezeigt ist, sind insgesamt sechs solcher Hebel 43 vorgesehen. Wird der Behälter 2 in den Trinkbecher 1 eingesetzt, so werden die Hebel 43 nach innen gedrückt und gleiten dabei mit ihren gleitfähigen vorderen Enden 44 zunächst über eine verhältnismäßig steile Schrägfläche 45 und drücken dadurch das Ventil in die geschlossene Stellung. Anschließend erreichen die vorderen gleitfähigen Enden 44 dann eine flachere Steigung 46, durch die die endgültige Schließbewegung mit größerer Kraft bewirkt wird und das Ventil 41 in der geschlossenen Stellung gehalten wird. Bei der in Fig. 3 gezeigten Ausführungsform ist der Trinkbecher 1 in einem Getränkehalter 22 angeordnet, wie er in verschiedenen Ausführungsformen zum Beispiel in Kraftfahrzeugen zu finden ist.

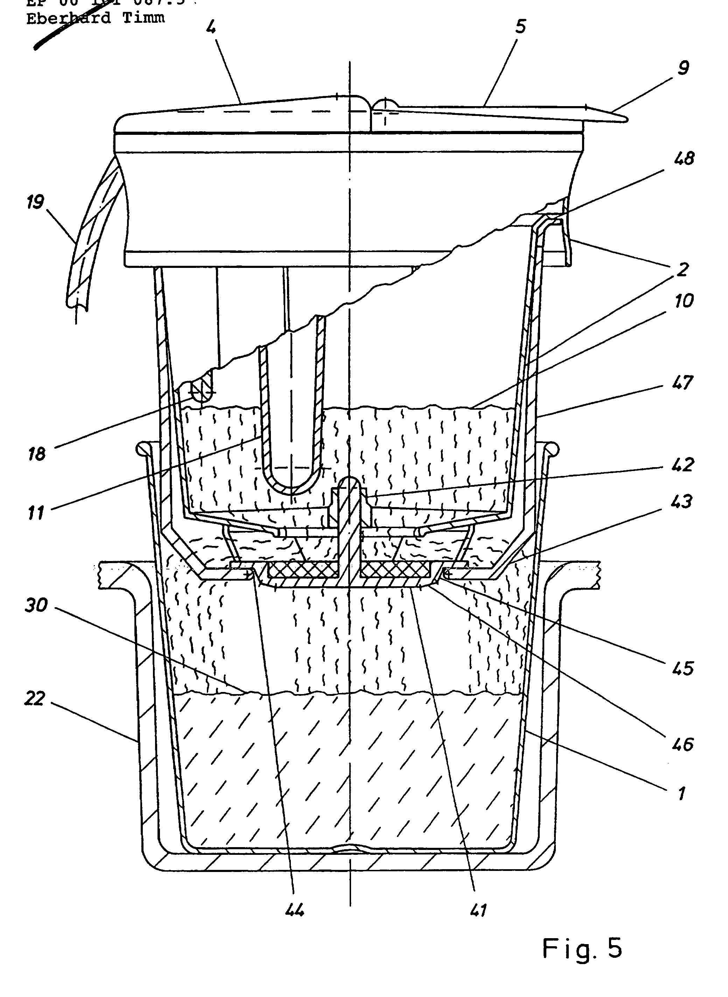

Wie dies in Fig. 4 gezeigt ist, brauchen die Arme 43 nicht insgesamt federnd zu sein, sondern können durch Ventilhebelfedern 47 vorgespannt sein. Mit 48 ist dabei die Basis gezeigt, an der die Federn befestigt sind. Wird nun, wie dies in Fig. 5 gezeigt ist, der Behälter 2 aus dem Trinkbecher 1 herausgehoben, so werden die Hebel 44 durch Federwirkung nach außen bewegt und geben das Ventil 41 frei, so daß das erhitzte Wasser in den Trinkbecher 1 strömen kann und dort die Heißgetränkflüssigkeit 30 bilden kann. Nachdem der Behälter 2 ganz herausgehoben ist, kann dann das heiße Getränk wie bei der Ausführungsform der Fig. 1 und 2 genossen werden, indem der Trinkbecher 1 aus der Halterung 2 herausgehoben wird.

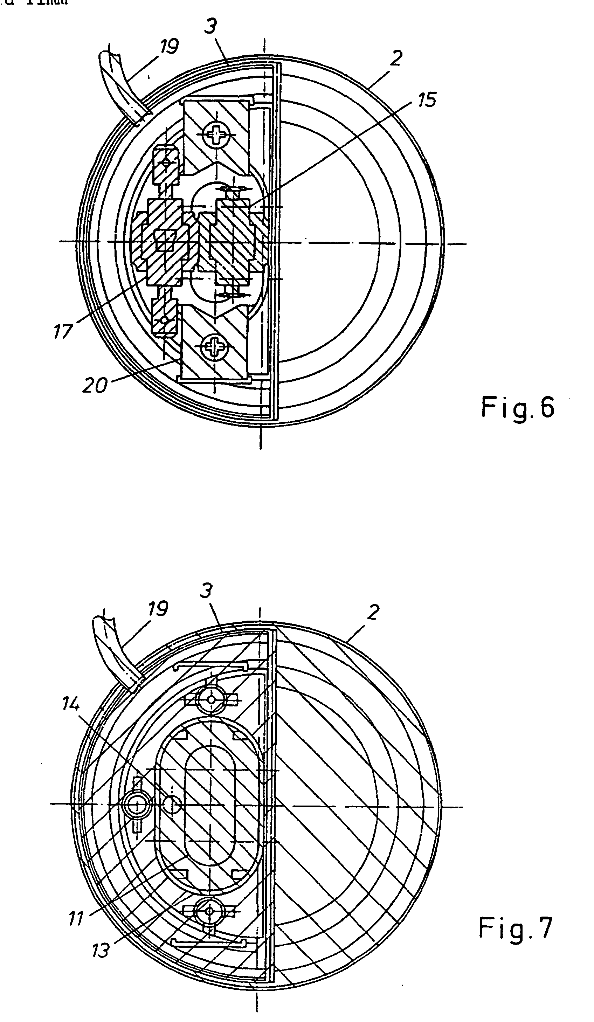

In den Fig. 6 und 7 ist die geometrische Anordnung der verschiedenen elektrischen Teile von oben gesehen gezeigt. In Fig. 6 sind dabei die Schalter 15 und 17 und die Halteklammern 20 für den Heizeinsatz 11 gezeigt, während diese bei der Darstellung der Fig. 7 entfernt sind.

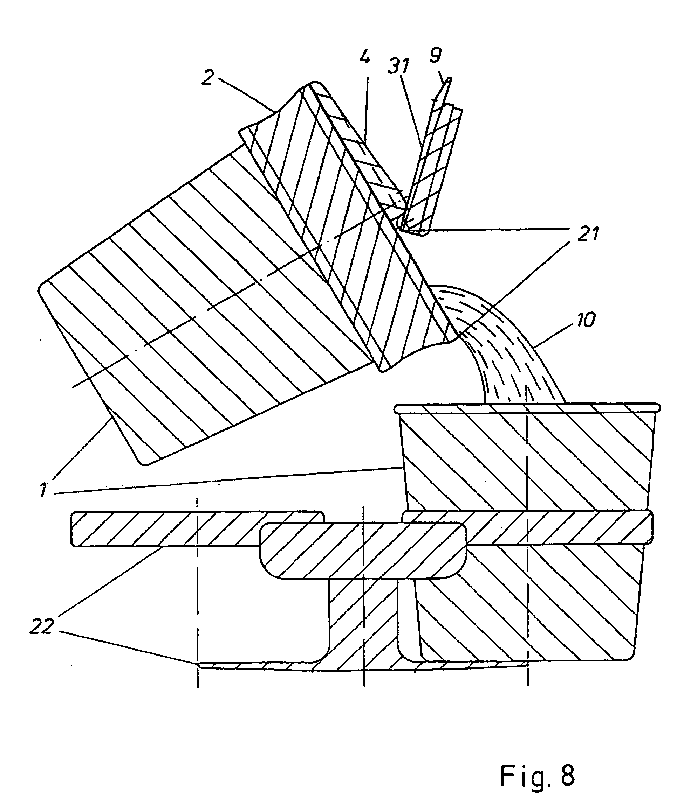

In Fig. 8 ist schematisch ein etwas anderes Verfahren gezeigt, wie Getränke und dergleichen aufgebrüht werden können. Dieses Verfahren kann vorteilhaft angewendet werden, wenn zwei Getränkehalter 22 oder aber ein Getränkehalter 22 für zwei Trinkbecher 1 vorhanden ist. Das Wasser wird dabei in dem erfindungsgemäßen Behälter 2 wie vorstehend erhitzt. Dabei befindet sich der Behälter 2 in einem Trinkbecher 1. Das Ventil ist dabei aufgrund der Tatsache verschlossen, daß sich der Behälter 2 im Trinkbecher 1 befindet. Wenn das Wasser 10 genügend erhitzt ist, wird der Behälter 2 nicht aus dem Trinkbecher herausgenommen. Vielmehr werden Trinkbecher 1 und Behälter 2 zusammen aus der Halterung 22 herausgehoben, und das Wasser 10 wird in den anderen Trinkbecher 1 umgegossen, in dem sich die Brühsubstanz 6 befindet. Dieses Verfahren ist auch mit Behältern 2 durchzuführen, die kein Ventil aufweisen, wobei dann der Trinkbecher 1, in den der Behälter 2 eingesetzt ist, als Halterung und Wärmeisolierung dient.

## Patentansprüche

1. Vorrichtung zum Zubereiten heißer Getränke, Suppen und ähnlicher Nahrungs/Genußmittel mit einem Trinkbecher (1) und einem darin anzuordnenden mit einer Heizeinrichtung (11) versehenen Behälter (2) für die zu erwärmende Flüssigkeit (10), die nach dem Erwärmen in den Trinkbecher (1) entleert wird, nachdem ein Ventil (26, 41) des Behälters (2) geöffnet worden ist, **dadurch gekennzeichnet, daß** das Ventil (26, 41) mit Betätigungseinrichtungen (28, 43) versehen ist, durch die es beim Einsetzen des Behälters (2) in den Trinkbecher (1) geschlossen und beim Herausnehmen geöffnet wird.

2. Vorrichtung nach Anspruch 1, **dadurch gekennzeichnet, daß** am unteren Umfangsrand des Behälters (2) ein zweiarmiger Hebel (28) schwenkbar gelagert ist, dessen erster Arm sich vom Lagerpunkt (24) nach oben erstreckt und dessen zweiter Arm unterhalb des Behälterbodens angeordnet ist und so ausgebildet ist, daß er bei Verschwenkung des ersten Arms zum Behälter (2) das in die Öffnungsstellung vorgespannte Ventil (26) in die geschlossene Stellung zieht.

3. Vorrichtung nach Anspruch 2, **dadurch gekennzeichnet, daß** der erste Arm eine Länge hat, die ungefähr 1/3 bis 2/3 der Höhe des Behälters (2) entspricht und an seinem oberen Ende mit einem hakenförmigen Vorsprung (25) versehen ist.

4. Vorrichtung nach Anspruch 1, **dadurch gekennzeichnet, daß** am oberen Rand des Behälters (2) mehrere sich nach unten erstreckende, den Boden teilweise umgreifende nach außen vorgespannte Hebel (43) vorgesehen sind, die beim Einsetzen des Behälters (2) in den Trinkbecher (1) nach innen gedrückt werden und dann mit ihren unteren Enden (44) das Ventil (41) schließen.

5. Vorrichtung nach Anspruch 4, **dadurch gekennzeichnet, daß** der bewegliche Teil des Ventils (41) mit zwei Schrägflächen (45, 46) unterschiedlicher Steigung am Umfang versehen ist, an denen die unteren Enden (44) der Hebel (43) angreifen.

6. Vorrichtung nach Anspruch 4 oder 5, **dadurch gekennzeichnet, daß** sechs um den Umfang herum gleichmäßig verteilte Hebel (43) vorgesehen sind.

7. Vorrichtung nach einem der Ansprüche 1 bis 6, **dadurch gekennzeichnet, daß** der Anschluß der Heizeinrichtung (11) von der Oberseite des Behälters (2) erfolgt.

8. Vorrichtung nach einem der Ansprüche 1 bis 7, **dadurch gekennzeichnet, daß** sie einen Trockenlaufschutzschalter (15) und einen Temperaturfühler (18) aufweist, die als Steuerschalter ausgebildet oder mit solchen verbunden sind.

9. Vorrichtung nach Anspruch 7 oder 8, **dadurch gekennzeichnet, daß** die Anschlußpunkte der Heizeinrichtung (11) und der Steuerschalter unterhalb des Pegels angeordnet sind, den die Flüssigkeit (10) nach Befüllen des Behälters (2) einnimmt.

10. Vorrichtung nach einem der Ansprüche 1 bis 9, **dadurch gekennzeichnet, daß** sie mindestens eine Anzeigelampe, insbesondere eine Leuchtdiode zum Anzeigen des Betriebszustands aufweist.

11. Verfahren zum Zubereiten heißer Getränke, Suppen und ähnlicher Nahrungs-/Genußmittel mit einem Trinkbecher und einem darin anzuordnenden mit einer Heißeinrichtung versehenen Behälter für die zu erwärmende Flüssigkeit, die nach dem Erwärmen in einen Trinkbecher entleert wird, bei dem der Behälter mit Flüssigkeit gefüllt wird, in einen Trinkbecher eingesetzt wird, und die Flüssigkeit erhitzt wird, **dadurch gekennzeichnet, daß** anschließend der Trinkbecher mit dem Behälter angehoben und die Flüssigkeit in einen zweiten Trinkbecher, der die Extrakt- oder die Brühsubstanz enthält, gegossen wird.

## Claims

1. Device for preparing hot beverages, soups and similar foods/luxury foods having a drinking beaker (1) and a container (2), for the liquid (10) to be heated, to be arranged therein and having a heating device (11), which liquid (10), after heating, is emptied into the drinking beaker (1) after a valve (26, 41) of the container (2) has been opened, **characterised in that** the valve (26, 41) is provided with actuating devices (28, 43) by means of which it is closed when the container (2) is placed in the drinking beaker (1) and is opened on removal of the container therefrom.

2. Device according to Claim 1, **characterised in that** a double-armed lever (28) is mounted at the bottom peripheral rim of the container (2) such that it can pivot, the first arm of said lever extending upwards from the bearing point (24) and the second arm of said lever being arranged below the bottom of the container and being so designed that when the first arm of the container (2) is pivoted it pulls the valve (26) that is pretensioned in the open position into the closed position.

3. Device according to Claim 2, **characterised in that** the first arm has a length that is approximately 1/3 to 2/3 the height of the container (2) and is provided at its upper end with a hook-shaped projection (25).

4. Device according to Claim 1, **characterised in that** several levers (43) that extend downwards, partially enclose the base and are pretensioned outwards are provided at the upper rim of the container (2), which levers are pressed inwards when the container (2) is placed in the drinking beaker (1) and then close the valve (41) by means of their bottom ends (44).

5. Device according to Claim 4, **characterised in that** the movable part of the valve (41) is provided at the periphery with two sloping surfaces (45, 46) of different gradient on which the bottom ends (44) of the levers (43) engage.

6. Device according to Claim 4 or 5, **characterised in that** six levers (43) uniformly distributed around the periphery are provided.

7. Device according to one of Claims 1 to 6, **characterised in that** connection of the heating device (11) takes place from the top of the container (2).

8. Device according to one of Claims 1 to 7, **characterised in that** it has a cut-off switch (15) to protect it against running dry and a temperature sensor (18) which are designed as control switches or are connected to such switches.

9. Device according to Claim 7 or 8, **characterised in that** the connection points for the heating device (11) and the control switches are arranged below the level that the liquid (10) assumes after filling of the container (2).

10. Device according to one of Claims 1 to 9, **characterised in that** it has at least one indicator lamp, in particular a light-emitting diode, for indicating the operational status.

11. Method for preparing hot beverages, soups and similar foods/luxury foods having a drinking beaker and a container, for the liquid to be heated, to be arranged therein and having a heating device, which liquid, after heating, is emptied into a drinking beaker, in which the container is filled with liquid and is placed in a drinking beaker and the liquid is heated, **characterised in that** the drinking beaker is then raised with the container and the liquid is poured into a second drinking beaker that contains the extract or the substance for infusion.

## Revendications

1. Dispositif pour préparer des boissons chaudes, des potages et des produits alimentaires/stimulants analogues avec un gobelet (1) et un récipient (2) à placer dans celui-ci et pourvu d'un dispositif de chauffage (11) pour le liquide à chauffer (10), qui est déversé dans le gobelet (1) après le chauffage, après qu'une soupape (26, 41) du récipient (2) se soit ouverte, **caractérisé en ce que** la soupape (26, 41) est pourvue de dispositifs d'actionnement (28, 43) par lesquels elle est fermée lors de l'introduction du récipient (2) dans le gobelet (1) et ouverte lors de son extraction.

2. Dispositif selon la revendication 1, **caractérisé en ce qu'**un levier à deux bras (28) est monté de façon pivotante sur le bord périphérique inférieur du récipient (2), dont le premier bras s'étend vers le haut à partir du point d'appui (24) et dont le deuxième bras est disposé en dessous du fond du récipient et est configuré de telle façon que, lors du pivotement du premier bras vers le récipient (2), il tire dans la position fermée la soupape (26) précontrainte dans la position ouverte.

3. Dispositif selon la revendication 2, **caractérisé en ce que** le premier bras a une longueur qui correspond environ à 1/3 à 2/3 de la hauteur du récipient (2) et est pourvu à son extrémité supérieure d'une saillie en forme de crochet (25).

4. Dispositif selon la revendication 1, **caractérisé en ce qu'**il est prévu sur le bord supérieur du récipient (2) plusieurs leviers précontraints vers l'extérieur (43), s'étendant vers le bas et entourant partiellement le fond, qui sont poussés vers l'intérieur lors de l'introduction du récipient (2) dans le gobelet (1) et ferment ainsi la soupape (41) avec leurs extrémités inférieures (44).

5. Dispositif selon la revendication 4, **caractérisé en ce que** la partie mobile de la soupape (41) est pourvue à sa périphérie de deux surfaces obliques (45, 46) d'inclinaison différente, sur lesquelles s'appliquent les extrémités inférieures (44) des leviers (43).

6. Dispositif selon la revendication 4 ou 5, **caractérisé en ce qu'**il est prévu six leviers (43) répartis uniformément autour de la périphérie.

7. Dispositif selon l'une quelconque des revendications 1 à 6, **caractérisé en ce que** le raccordement du dispositif de chauffage (11) est effectué par la face supérieure du récipient (2).

8. Dispositif selon l'une quelconque des revendications 1 à 7, **caractérisé en ce qu'**il comporte un interrupteur de protection contre un fonctionnement à sec (15) et un capteur de température (18), qui constituent des interrupteurs de commande ou qui sont raccordés à ceux-ci.

9. Dispositif selon la revendication 7 ou 8, **caractérisé en ce que** les points de raccordement du dispositif de chauffage (11) et des interrupteurs de commande sont disposés en dessous du niveau que le liquide (10) atteint après le remplissage du récipient (2).

10. Dispositif selon l'une quelconque de revendications 1 à 9, **caractérisé en ce qu'**il comporte au moins un voyant lumineux, en particulier une diode électroluminescente pour afficher l'état de fonctionnement.

11. Procédé pour préparer des boissons chaudes, des potages et des produits alimentaires/stimulants analogues, avec un gobelet et un récipient à introduire dans celui-ci et pourvu d'un dispositif de chauffage pour le liquide à chauffer, qui est vidé dans un gobelet après le chauffage, dans lequel le récipient est rempli de liquide, est introduit dans un gobelet et le liquide est chauffé, **caractérisé en ce que** le gobelet est ensuite soulevé avec le récipient et le liquide est déversé dans un deuxième gobelet, qui contient l'extrait ou la substance de bouillon.
